(19) Europäisches Patentamt / European Patent Office / Office européen des brevets

(11) EP 4 772 560 A1

# (12) EUROPEAN PATENT APPLICATION
published in accordance with Art. 153(4) EPC

(43) Date of publication:
**08.07.2026 Bulletin 2026/28**

(21) Application number: **24860447.2**

(22) Date of filing: **30.08.2024**

(51) International Patent Classification (IPC):
***C08G 63/183*** *(2006.01)* ***C08G 63/199*** *(2006.01)*
***C08G 63/78*** *(2006.01)*

(52) Cooperative Patent Classification (CPC):
**C08G 63/183; C08G 63/199; C08G 63/78;**
Y02W 30/62

(86) International application number:
**PCT/KR2024/013010**

(87) International publication number:
**WO 2025/048528 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.09.2023 KR 20230116192**

(71) Applicant: **SK Chemicals Co., Ltd.**
**Seongnam-si, Gyeonggi-do 13494 (KR)**

(72) Inventors:
- **HWANG, Da-Young**
**Seongnam-si, Gyeonggi-do 13494 (KR)**
- **KIM, Ji-Hun**
**Seongnam-si, Gyeonggi-do 13494 (KR)**
- **PARK, Kwang-Woo**
**Seongnam-si, Gyeonggi-do 13494 (KR)**
- **LEE, Seong-Ki**
**Seongnam-si, Gyeonggi-do 13494 (KR)**
- **LEE, Yoo Jin**
**Seongnam-si, Gyeonggi-do 13494 (KR)**
- **LEE, Joong Ki**
**Seongnam-si, Gyeonggi-do 13494 (KR)**

(74) Representative: **Dehns**
**10 Old Bailey**
**London EC4M 7NG (GB)**

## (54) POLYESTER RESIN COMPRISING REGENERATED BIS(2-HYDROXYETHYL) TEREPHTHALATE, AND ARTICLE COMPRISING POLYESTER RESIN

(57) A polyester resin according to one embodiment comprises regenerated bis(2-hydroxyethyl)terephthalate obtained by means of depolymerization of waste polyester, and the content of acetaldehyde is controlled to be within a predetermined range. The polyester resin according to the embodiment has excellent quality such as heat resistance and color while being polymerized using a regenerated monomer. In addition, provided is an article comprising the polyester resin according to the embodiment.

EP 4 772 560 A1

## Description

### Technical Field

The present invention relates to a polyester resin comprising recycled bis(2-hydroxyethyl) terephthalate and to an article comprising the same.

### Background Art

Polyester is widely used as a material for beverage-filling containers, packaging films, audio and video films, and the like by virtue of its excellent mechanical strength, thermal resistance, transparency, and gas barrier properties. In addition, polyester is widely produced worldwide as an industrial material such as medical fibers and tire cords. In particular, polyester sheets or plates have good transparency and excellent mechanical strength, so that they are widely used as raw materials for cases, boxes, partitions, shelves, panels, packaging materials, building materials, interior and exterior materials, and the like.

As a result, waste of plastics such as polyester is generated globally at an unmanageable level every year. Recently, countries around the world have prepared regulations and plans for recycling waste plastic resources, including waste polyester. For example, there is an attempt to use a recycled resin in packaging materials used in various fields at a certain ratio or more. Although physical or chemical methods are used as methods of recycling waste polyester, physical recycling methods cannot guarantee purity and, therefore, are not widely used.

In chemical recycling methods, the ester bond of waste polyester is cleaved to depolymerize it. Reactions such as glycolysis, hydrolysis, methanolysis, and aminolysis are used. Glycolysis among them is to decompose waste polyester by adding a glycol such as ethylene glycol or diethylene glycol at high temperatures. A reaction product that mainly contains bis(2-hydroxyethyl) terephthalate (BHET) is obtained. The bis(2-hydroxyethyl) terephthalate may be used as a raw material for preparing a polyester resin after the crystallization or purification thereof.

However, bis(2-hydroxyethyl) terephthalate recycled in this way may contain reagents or solvents used in various chemical steps during the depolymerization of waste polyester, or by-products formed by side reactions with them. These impurities may remain in trace amounts even after several rounds of purification. In particular, acetaldehyde is formed as a by-product during the polycondensation reaction for preparing a polyester resin. There was a problem in that when polymerization was performed using a recycled monomer, the side reaction was further aggravated by impurities, which lowered the quality, such as thermal resistance and color, of the polyester resin.

In addition, although thermoplastic polyester resins are widely used in the manufacture of beverage containers by virtue of their less sensitive properties to heat and oxygen, acetaldehyde as a by-product may change the flavor of beverages stored in the containers, adversely affecting the taste. Therefore, research is being conducted to control the raw materials and process conditions to minimize the formation of acetaldehyde in the process for preparing a polyester resin.

[Prior Art Document]

(Patent Document 1) Korean Laid-open Patent Publication No. 2022-0068991

### Disclosure of Invention

### Technical Problem

In the case of recycled polyester resins using monomers such as recycled bis(2-hydroxyethyl) terephthalate, there is a concern that side reactions may increase as compared with virgin resins. However, no research has been conducted to reduce the formation of acetaldehyde in recycled polyester resins.

In addition, research has been conducted to reduce the amount of acetaldehyde in polyester resins using new additives. However, when new additives are added, the amount of additives has to be controlled in the process, and there is a problem in that the properties of the polyester resin produced are deteriorated.

Accordingly, an object of the present invention is to provide a polyester resin having excellent qualities, such as thermal resistance and color, by controlling the content of acetaldehyde to a certain range while it is polymerized using a recycled monomer.

### Solution to Problem

According to an aspect of the present invention, there is provided a polyester resin, which comprises recycled bis(2-hydroxyethyl) terephthalate (BHET) obtained by the depolymerization of waste polyester, wherein the content of

acetaldehyde is 1 ppm or less.

According to another aspect of the present invention, there is provided an article, which comprises the polyester resin.

## Advantageous Effects of Invention

The polyester resin according to the present invention has excellent qualities, such as thermal resistance and color, by controlling the content of acetaldehyde to a certain range while it comprises bis(2-hydroxyethyl) terephthalate obtained by the depolymerization of waste polyester.

## Best Mode for Carrying out the Invention

In this specification, terms referring to the respective components are used to distinguish them from each other and are not intended to limit the scope of the embodiment. In addition, in the present specification, a singular expression is interpreted to cover a plural number as well unless otherwise specified in the context.

In the present specification, the terms first, second, and the like are used to describe various components. But the components should not be limited by the terms. The terms are used for the purpose of distinguishing one element from another.

In the present specification, the term "comprising" is intended to specify a particular characteristic, region, step, process, element, and/or component. It does not exclude the presence or addition of any other characteristic, region, step, process, element, and/or component, unless specifically stated to the contrary.

The molecular weight of a compound or polymer described in the present specification, for example, a number average molecular weight or a weight average molecular weight, is a relative mass based on carbon-12 as is well known. Although its unit is not described, it may be understood as a molar mass (g/mole) of the same numerical value, if necessary.

In the present specification, a "derivative" of a specific compound refers to a compound obtained by partially transforming the compound through a chemical reaction or combining it with other components, thereby containing the main part of the compound.

In the present specification, a unit or group "derived" from a specific component refers to a part of the component contained in a final product through a chemical reaction such as a polymerization reaction. It may be present in a form in which a part thereof is modified during the reaction or it is combined with other components. For example, a unit or group derived from at least one monomer or oligomer is contained in the chain constituting a polymer.

In the numerical range that limits the size and physical properties of components and the like described in the present specification, when a numerical range limited with the upper limit only and a numerical range limited with the lower limit only are separately exemplified, it should be understood that a numerical range combining these upper and lower limits is also encompassed in the exemplary scope of the invention.

## Polyester resin

According to an aspect of the present invention, there is provided a polyester resin, which comprises recycled bis(2-hydroxyethyl) terephthalate (BHET) obtained by the depolymerization of waste polyester, wherein the content of acetaldehyde is 1 ppm or less.

The polyester resin of the present invention is a polyester resin regenerated through the chemical recycling of waste polyester.

Specifically, since the polyester resin of the present invention is polymerized using recycled BHET, it comprises a repeat unit derived from recycled BHET in the polymer chains.

The content of recycled BHET in the polyester resin of the present invention may be 1% by weight or more, 5% by weight or more, 10% by weight or more, 30% by weight or more, 50% by weight or more, 70% by weight or more, or 90% by weight or more. In addition, the content of recycled BHET may be 100% by weight or less, 99% by weight or less, 80% by weight or less, 60% by weight or less, 40% by weight or less, or 20% by weight or less.

As an example, the recycled bis(2-hydroxyethyl) terephthalate may be employed in an amount of 10% by weight to 99% by weight based on the weight of the polyester resin.

In the polyester resin according to an embodiment of the present invention, the content of acetaldehyde is 1 ppm or less.

Specifically, the content of acetaldehyde in the polyester resin may be less than 1 ppm, 0.9 ppm or less, 0.8 ppm or less, 0.7 ppm or less, 0.6 ppm or less, 0.5 ppm or less, 0.4 ppm or less, 0.3 ppm or less, or 0.2 ppm or less. Meanwhile, the lower limit of the content of acetaldehyde in the polyester resin is not particularly limited, but it may be, for example, 0 ppm or more, greater than 0 ppm, 0.001 ppm or more, 0.01 ppm or more, or 0.1 ppm or more.

The content of acetaldehyde may be a content of acetaldehyde based on the weight of the polyester resin (i.e.,

ppmw).

The acetaldehyde is a compound having the formula $CH_3CHO$ and is contained in the resin.

The content of acetaldehyde may be measured through, for example, LC-UV (liquid chromatography with a UV detector). Specifically, 1 g of a polyester resin is added to 10 ml of a mixture of acetonitrile and deionized water (50:50 by volume) to prepare a sample, which is then measured for the content of acetaldehyde through LC-UV. More specifically, the UV-LC may be carried out using a UV detector with a wavelength of 363 nm under the conditions of a column temperature of 35°C, a sample volume of 20 μl, and a flow rate of 0.8 ml/minute.

The polyester resin according to the present invention has excellent qualities, such as thermal resistance and color, by controlling the content of acetaldehyde to a certain range while it comprises bis(2-hydroxyethyl) terephthalate obtained by the depolymerization of waste polyester.

In particular, even when the polyester resin is stored under high temperature and humid conditions, it has a change in color controlled to a certain range.

According to an embodiment, the polyester resin may have a ΔCol-b according to the following Equation 1 in the range of -1 to +1.

$$\Delta\text{Col-b} = \text{Col-b}\ [10D] - \text{Col-b}\ [0D]$$

Here, Col-b [10D] is the b value in the Hunter Lab color space measured after the polyester resin is stored at 50°C and 60% R.H. for 10 days, and Col-b [0D] is the b value in the Hunter Lab color space measured for the polyester resin before storage.

For example, ΔCol-b may be -1 or more, -0.8 or more, -0.6 or more, -0.4 or more, or -0.2 or more, and 1 or less, 0.8 or less, 0.6 or less. 0.4 or less, or 0.2 or less. Specifically, ΔCol-b may be in the range of -0.8 to 0.8, -0.6 to 0.6, -0.4 to 0.4, or -0.2 to 0.2.

In addition, according to the present invention, it is possible to provide a polyester resin having more enhanced quality, such as thermal resistance, by adjusting the contents and characteristics of the ethylene glycol component and the recycled BHET component that constitute the polyester resin.

In particular, the thermal resistance index of a polyester resin calculated from the mole fraction of the ethylene glycol component among the diol component constituting the polyester resin associated with the characteristics and weight fraction of the recycled BHET component can be adjusted to a specific range.

According to an embodiment, a resin thermal resistance index is calculated using the mole fraction of ethylene glycol among the diol component constituting the polyester resin as a parameter. The resin thermal resistance index may be adjusted to a specific range. The resin thermal resistance index is a numerical value associated with the content of ethylene glycol constituting the polyester resin. If the resin thermal resistance index is adjusted, it is possible to suppress the deterioration in thermal resistance of the polyester resin even when a large amount of recycled BHET is used.

Specifically, the polyester resin may have a resin thermal resistance index of 2.0 or less as calculated by the following Equation (Ia).

$$\text{Resin thermal resistance index} = \text{mole fraction of ethylene glycol} \times 0.02 \quad \text{(Ia)}$$

Here, the mole fraction of ethylene glycol is the content (% by mole) of the ethylene glycol component based on the total number of moles of the diol component contained in the polyester resin.

In Equation (Ia), it is calculated by taking only the numerical value excluding the unit of the parameter.

For example, the resin thermal resistance index may be 2.0 or less, 1.8 or less, 1.6 or less, 1.4 or less, 1.2 or less, 1.0 or less, 0.8 or less, or 0.6 or less. In addition, the resin thermal resistance index may be 0 or more, 0.1 or more, 0.2 or more, 0.3 or more, 0.4 or more, or 0.5 or more. As a specific example, the resin thermal resistance index may be 0 to 2.0 or 0.1 to 2.0.

According to another embodiment, a recycle thermal resistance index is calculated using the characteristics and weight fraction of the recycled BHET component employed in the polymerization of the polyester resin as a parameter. The recycle thermal resistance index may be adjusted to a specific range. The recycle thermal resistance index is a thermal resistance index attributed to the recycled BHET that is employed in the polymerization of the polyester resin. When the recycle thermal resistance index is adjusted, it can be controlled to have a thermal resistance level similar to that of a resin polymerized from a virgin monomer.

Specifically, the polyester resin may have a recycle thermal resistance index of 7.0 or less as calculated by the following Equation (Ib).

$$\text{Recycle thermal resistance index} = (\text{r-BHET TDI}) \times \text{weight fraction of r-BHET} \times 2 \quad \text{(Ib)}$$

Here, the weight fraction of r-BHET is the content (% by weight) of recycled BHET based on the total weight of the polyester resin, and the r-BHET TDI is defined by the following equation when the recycled BHET is analyzed using high-performance liquid chromatography (HPLC).

$$\text{r-BHET TDI} = [\text{DEG-ester-1}] + [\text{DEG-ester-2}] \times 2 + \exp\text{^}[\text{HA-ester}]$$

Here, DEG-ester-1 is the peak area fraction (%) of 2-hydroxyethyl[2-(2-hydroxyethoxy)ethyl] terephthalate, DEG-ester-2 is the peak area fraction (%) of bis[2-(2-hydroxyethoxy)ethyl]benzene-1,4-dicarboxylate, and HA-ester is the peak area fraction (%) of 2-hydroxyethyl(2-acetoxyethyl) terephthalate.
Here, it is calculated by taking only the numerical values excluding the units of these parameters.
For example, the recycle thermal resistance index may be 7.0 or less, 6.0 or less, 5.0 or less, 4.0 or less, 3.0 or less, 2.0 or less, or 1.0 or less. In addition, the recycle thermal resistance index may be 0 or more, 0.1 or more, 0.2 or more, 0.3 or more, 0.4 or more, or 0.5 or more. As a specific example, the recycle thermal resistance index may be 0 to 7.0 or 0.1 to 7.0.
According to another embodiment, a combined thermal resistance index is calculated using the resin thermal resistance index and the recycle thermal resistance index as parameters. The combined thermal resistance index may be adjusted to a specific range. Since the combined thermal resistance index comprehensively considers the quality and amount of recycled BHET and the content of ethylene glycol in the polyester resin, it is possible to more effectively control the thermal resistance of the polyester resin by adjusting the combined thermal resistance index.
Specifically, the polyester resin has a combined thermal resistance index of 9.0 or less as calculated by the following Equation (I).

Combined thermal resistance index = resin thermal resistance index + recycle thermal resistance index (I) (I)

Here, the resin thermal resistance index is calculated using the above Equation (Ia), and the recycle thermal resistance index is calculated using the above Equation (Ib).
For example, the combined thermal resistance index may be 9.0 or less, 8.0 or less, 7.0 or less, 6.0 or less, 5.0 or less, 4.0 or less, 3.0 or less, or 2.0 or less. In addition, the combined thermal resistance index may be 0 or more, 0.1 or more, 0.2 or more, 0.3 or more, 0.4 or more, or 0.5 or more. As a specific example, the combined thermal resistance index may be 0 to 9.0 or 0.1 to 9.0.
Since bis(2-hydroxyethyl) terephthalate used in the preparation of the polyester resin of the present invention has a structure in which two ethylene glycols and one terephthalic acid are bonded, the polyester resin of the present invention may comprise a repeat unit derived from ethylene glycol and terephthalic acid.
As described above, the polyester resin of the present invention comprises a dicarboxylic acid component and a diol component as monomer components (polymer constituent units) constituting the same. They may be derived from bis(2-hydroxyethyl) terephthalate initially supplied and the monomers additionally supplied for the preparation of the polyester resin.
The polyester resin may comprise at least one comonomer selected from dicarboxylic acids and diols. Thus, the polyester resin may be a copolymerized polyester resin.
For example, the dicarboxylic acid component may further comprise an aromatic dicarboxylic acid component, an aliphatic dicarboxylic acid component, or mixed components thereof, other than terephthalic acid. The dicarboxylic acid other than terephthalic acid may be employed in an amount of 1% by weight to 30% by weight based on the weight of the entire dicarboxylic acid components.
The aromatic dicarboxylic acid component may be an aromatic dicarboxylic acid having 8 to 20 carbon atoms, preferably, 8 to 14 carbon atoms, or a mixture thereof. Examples of the aromatic dicarboxylic acid include isophthalic acid, naphthalenedicarboxylic acids such as 2,6-naphthalenedicarboxylic acid, diphenyl dicarboxylic acid, 4,4'-stilbendicarboxylic acid, 2,5-furandicarboxylic acid, 2,5-thiophenedicarboxylic acid, and the like, but it is not limited thereto.
The aliphatic dicarboxylic acid component may be an aliphatic dicarboxylic acid having 4 to 20 carbon atoms, preferably, 4 to 12 carbon atoms, or a mixture thereof. Examples of the aliphatic dicarboxylic acid include linear, branched, or cyclic aliphatic dicarboxylic acid components such as cyclohexanedicarboxylic acids such as 1,4-cyclohexanedicarboxylic acid and 1,3-cyclohexanedicarboxylic acid, phthalic acid, sebacic acid, succinic acid, isodecylsuccinic acid, maleic acid, fumaric acid, adipic acid, glutaric acid, azelaic acid, and the like, but it is not limited thereto.
As a specific example, the dicarboxylic acid may be at least one selected from the group consisting of isophthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

The diol component may further comprise a diol component, other than ethylene glycol, as a comonomer. The comonomer may comprise, for example, at least one selected from the group consisting of diethylene glycol, cyclohexanedimethanol, cyclohexanedimethanol derivatives, and isosorbide.

The diethylene glycol may contribute to enhancing the transparency and impact resistance of a polyester resin. For example, the diethylene glycol may be employed in an amount of 0.1% by mole to 50% by mole based on the number of moles of the entire diols.

The cyclohexanedimethanol (e.g., 1,2-cyclohexanedimethanol, 1,3-cyclohexanedimethanol, and 1,4-cyclohexanedimethanol) may contribute to enhancing the transparency and impact resistance of a polyester resin produced. For example, cyclohexanedimethanol may be employed in an amount of 5% by mole to 90% by mole based on the number of moles of the entire diol components. The cyclohexanedimethanol derivative may be 4-(hydroxymethyl)cyclohexylmethyl-4-(hydroxymethyl)cyclohexanecarboxylate or 4-(4-(hydroxymethyl)cyclohexylmethoxymethyl)cyclohexylmethanol. The cyclohexanedimethanol derivatives may be employed in an amount of 0.1% by mole to 25% by mole based on the number of moles of the entire diol components.

The isosorbide may enhance the processability of a final polyester resin. Although the transparency and impact resistance of a polyester resin are enhanced by the diol component of cyclohexanedimethanol and ethylene glycol, shear fluidization characteristics should be improved and the crystallization rate should be delayed for processability; however, it is difficult to achieve this effect with cyclohexanedimethanol and ethylene glycol alone. Thus, if isosorbide is employed as a diol component, the shear fluidization characteristics are improved and the crystallization rate is delayed while transparency and impact resistance are maintained. As a result, it is possible to improve the processability of a polyester resin produced. Preferably, isosorbide may be employed in an amount of 0.1% by mole to 70% by mole based on the number of moles of the entire diol components.

As a specific example, the diol may be at least one selected from the group consisting of isosorbide, neopentyl glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol.

As described above, a monomer (virgin monomer) commonly used for the polymerization of a polyester resin in addition to recycled BHET can be used in the preparation of the polyester resin.

In addition, at least one recycled monomer obtained by the depolymerization of waste polyester can be used in addition to recycled BHET in the preparation of the polyester resin. A "recycled monomer" may be a monomer obtained by decomposing, depolymerizing, reprocessing, or repolymerizing waste plastics such as waste polyester by physical or chemical methods, or polymerization raw materials containing the monomer or derived from the monomer. Such recycled monomers may be obtained directly from waste plastics such as waste polyester by known methods or can be purchased commercially and used.

As a specific example, the at least one recycled monomer may be selected from the group consisting of a recycled dicarboxylic acid, a recycled dicarboxylic acid derivative, a recycled diol, and a recycled diol derivative. As a more specific example, the polyester resin may comprise at least one recycled monomer selected from the group consisting of recycled ethylene glycol, recycled 1,4-cyclohexanedimethanol, recycled diethylene glycol, recycled neopentyl glycol, recycled isosorbide, recycled terephthalic acid, recycled dimethyl terephthalate, recycled isophthalic acid, and recycled dimethyl isophthalate. However, the type of recycled monomer that can be used in the present invention is not limited thereto. Any recycled monomer that can be used in the preparation of a polyester resin can be used. Such a recycled monomer may be contained in a polyester resin by completely replacing a virgin monomer. Alternatively, a recycled monomer and a virgin monomer may be together contained in a polyester resin at a certain ratio.

The polyester resin may also comprise a catalyst that has been used in the polymerization reaction for its preparation. For example, the polyester resin may comprise at least one catalyst selected from metal oxides and acetates. The metal contained in the catalyst may be selected from the group consisting of antimony (Sb), titanium (Ti), germanium (Ge), manganese (Mn), cobalt (Co), tin (Sn), and calcium (Ca).

**Recycled bis(2-hydroxyethyl) terephthalate**

The polyester resin according to the present invention comprises recycled bis(2-hydroxyethyl) terephthalate (BHET).

Bis(2-hydroxyethyl) terephthalate (BHET) is an ester of two ethylene glycols and one terephthalic acid. For example, it is a compound formed as an intermediate in the process of preparing a polyester such as polyethylene terephthalate (PET) through the polymerization of ethylene glycol and terephthalic acid or its ester.

Meanwhile, recycled bis(2-hydroxyethyl) terephthalate obtained by the depolymerization of waste polyester as described above (referred to as recycled BHET) may contain reagents or solvents used in various chemical steps during

the depolymerization of waste polyester, or by-products formed by side reactions with them. Thus, BHET recycled by a common depolymerization process contains organic and inorganic impurities in addition to BHET as the main component; thus, its purity is not high.

However, recycled bis(2-hydroxyethyl) terephthalate used in the preparation of a polyester resin in the present invention has excellent purity and quality although it is obtained by the depolymerization of waste polyester.

The purity of the recycled BHET may be measured using liquid chromatography or the like. Specifically, the purity of the recycled BHET may be calculated by measuring the fraction (%) of the peak area of BHET out of the total peak area in a spectrum obtained using high-performance liquid chromatography (HPLC).

The recycled bis(2-hydroxyethyl) terephthalate may have a peak area fraction of bis(2-hydroxyethyl) terephthalate of 95% or more when measured by high-performance liquid chromatography (HPLC). For example, the peak area fraction of bis(2-hydroxyethyl) terephthalate may be 95% or more, 97% or more, 98% or more, 99% or more, or 99.5% or more, specifically, 95% to 100% or 97% to 100%.

Meanwhile, the recycled bis(2-hydroxyethyl) terephthalate may comprise a compound other than BHET, specifically, BHET analogues, BHET oligomers (e.g., dimers, trimers), as well as esters, acetates, and the like.

Specifically, the recycled bis(2-hydroxyethyl) terephthalate may have a peak area fraction of oligomers such as dimers or higher of 2.0% or less, in total, when measured by high-performance liquid chromatography (HPLC). More specifically, the peak area fraction of oligomers such as dimers or higher may be 1.5% or less, 1.0% or less, or 0.5% or less.

In general, bis(2-hydroxyethyl) terephthalate, recycled through depolymerization of a waste polyester resin, contains oligomeric substances such as dimers and trimers, along with by-products derived from diethylene glycol (DEG) formed at high depolymerization temperatures, which serve as a factor to impair the quality of a product.

In addition, an acetate (e.g., zinc acetate), which is mainly used as a catalyst in a glycolysis reaction, reacts with ethylene glycol during the depolymerization reaction to be converted to hydroxyethyl acetate (HA). HA has a boiling point similar to that of ethylene glycol, which is mainly used as a solvent; thus, it as an impurity is not easily filtered out during the recovery and reuse of ethylene glycol. As a result, as the process is repeated, it accumulates to form by-products.

As shown in the following Reaction Scheme 1, acetic acid (AcOH) derived from metal acetate, which is mainly used as a catalyst, may react with ethylene glycol (EG) to produce an acetate-based compound such as 2-hydroxyethyl acetate (HA) and water ($H_2O$).

[Reaction Scheme 1]

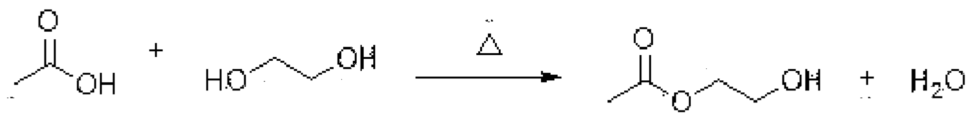


AcOH EG HA

In addition, as shown in the following Reaction Scheme 2, 2-hydroxyethyl acetate (HA) may be converted to ester compounds such as 2-hydroxyethyl(2-acetoxyethyl) terephthalate (HAET) and ethylene glycol (EG) through a transesterification reaction with bis(2-hydroxyethyl) terephthalate (BHET).

[Reaction Scheme 2]

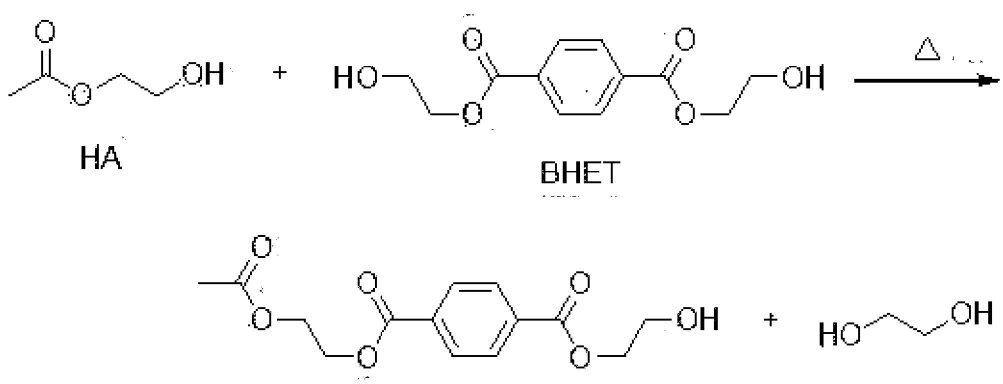


HA BHET

HAET EG

The recycled bis(2-hydroxyethyl) terephthalate has a peak area fraction of acetate-based ester compounds of 1.0% or less when measured by high-performance liquid chromatography (HPLC). Specifically, the recycled bis(2-hydroxyethyl) terephthalate may have a peak area fraction of acetate-based ester compounds of 0.7% or less, 0.5% or less, 0.3% or less, or 0.2% or less, when measured by high-performance liquid chromatography (HPLC). Meanwhile, the lower limit of the peak area fraction of acetate-based ester compounds is not particularly limited, but it may be 0% or more, 0.001% or more, 0.01% or more, or 0.1% or more, in total. The acetate-based ester compound may be a 2-hydroxyethyl acetate ester compound. Specifically, it may comprise at least one selected from the group consisting of 2-hydroxyethyl(2-acetoxyethyl) terephthalate (HAET), 2-acetoxyethyl[2-(2-hydroxyethoxy)ethyl] terephthalate, and 2-hydroxyethyl [2-[2-(2-hydroxyethoxy)ethoxy]ethyl] terephthalate. As a more specific example, the acetate-based ester compounds may comprise 2-hydroxyethyl(2-acetoxyethyl) terephthalate.

In addition, the recycled bis(2-hydroxyethyl) terephthalate may have a peak area fraction of diethylene glycol (DEG) ester compounds of 2.0% or less, in total, when measured by high-performance liquid chromatography (HPLC). For example, the peak area fraction of diethylene glycol (DEG) ester compounds may be 1.5% or less, 1% or less, or 0.5% or less, in total. Meanwhile, the lower limit of the peak area fraction of diethylene glycol (DEG) ester compounds is not particularly limited, but it may be 0% or more, 0.001% or more, 0.01% or more, or 0.1% or more, in total. The diethylene glycol ester compound may comprise 2-hydroxyethyl[2-(2-hydroxyethoxy)ethyl] terephthalate and bis[2-(2-hydroxyethoxy)ethyl]benzene-1,4-dicarboxylate. These are represented by the following Formulae 1 and 2, respectively.

[Formula 1]

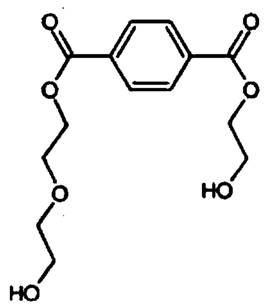

[Formula 2]

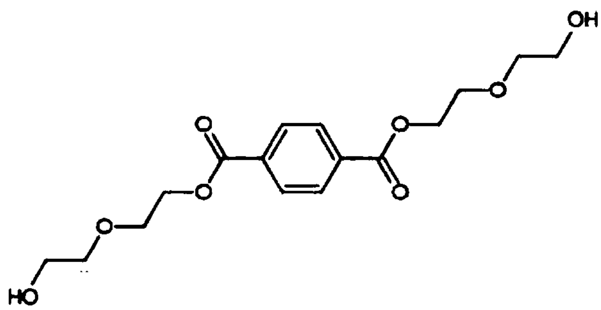

According to an embodiment, the recycled bis(2-hydroxyethyl) terephthalate (BHET) has a peak area fraction of 2-hydroxyethyl[2-(2-hydroxyethoxy)ethyl] terephthalate (first diethylene glycol ester) of 2.5% or less when measured by high-performance liquid chromatography (HPLC). Specifically, the peak area fraction of 2-hydroxyethyl[2-(2-hydroxyethoxy)ethyl] terephthalate measured by HPLC may be 2.0% or less, 1.5% or less, 1.0% or less, or 0.5% or less.

According to another embodiment, the recycled bis(2-hydroxyethyl) terephthalate (BHET) has a peak area fraction of bis[2-(2-hydroxyethoxy)ethyl]benzene-1,4-dicarboxylate (second diethylene glycol ester) of 0.5% or less when measured by high-performance liquid chromatography (HPLC). Specifically, the peak area fraction of bis[2-(2-hydroxyethoxy)ethyl]benzene-1,4-dicarboxylate measured by HPLC may be 0.2% or less, more specifically, 0.15% or less, 0.1% or less, or 0.05% or less.

In the present invention, the contents of acetate-based ester compounds and diethylene glycol ester compounds in the recycled bis(2-hydroxyethyl) terephthalate are adjusted to specific levels. Thus, it is possible to prevent thermal resistance characteristics from deteriorating by these compounds in the polymerization of a recycled polyester resin.

As the content of diethylene glycol ester compounds in the recycled bis(2-hydroxyethyl) terephthalate increases, the thermal resistance properties such as the melting point of a final polymer resin linearly decrease. Acetate-based ester compounds act as a terminator that inhibits the growth of polymer chains. As its content increases, the thermal resistance properties of a final polymer resin decrease exponentially. A correlation can be derived using this relationship to predict the thermal resistance properties of a polymer prepared using recycled bis(2-hydroxyethyl) terephthalate.

For example, the recycled bis(2-hydroxyethyl) terephthalate may have a thermal property drop index (TDI) of 6.0 or less, 5.0 or less, or 4.0 or less, specifically, 3.0 or less, as defined by the following equation, when measured by high-performance liquid chromatography (HPLC).

$$\text{r-BHET TDI} = [\text{DEG-ester-1}] + [\text{DEG-ester-2}] \times 2 + \exp\text{^}[\text{HA-ester}]$$

Here, DEG-ester-1 is the peak area fraction (%) of 2-hydroxyethyl[2-(2-hydroxyethoxy)ethyl] terephthalate, DEG-ester-2 is the peak area fraction (%) of bis[2-(2-hydroxyethoxy)ethyl]benzene-1,4-dicarboxylate, and HA-ester is the peak area fraction (%) of 2-hydroxyethyl(2-acetoxyethyl) terephthalate. It is calculated by taking only the numerical values excluding the units of these parameters.

Specifically, if the thermal property drop index (TDI) defined by the above equation is 3.0 or less, it is possible to more effectively prevent the thermal resistance properties from deteriorating by these compounds in the polymerization of

a recycled polyester resin. More specifically, the thermal property drop index (TDI) may be 2.5 or less or 2.0 or less. Alternatively, the thermal property drop index (TDI) may be 0 to 3.0, 0 to 2.5, 0.5 to 3.0, 1.0 to 3.0, or 0.5 to 2.5.

In addition, the recycled bis(2-hydroxyethyl) terephthalate may have a peak area fraction of monohydroxyethyl terephthalate (MHET) of 2% or less, 1.5% or less, 1% or less, or 0.5% or less, when measured by high-performance liquid chromatography (HPLC).

In addition, the total content of residual ethylene glycol in the recycled bis(2-hydroxyethyl) terephthalate may be 1% by weight or less, 0.9% by weight or less, 0.5% by weight or less, or 0.3% by weight or less, based on a weight ratio detected by gas chromatography analysis. More specifically, the content of residual ethylene glycol in the recycled bis(2-hydroxyethyl) terephthalate may be 0.5% by weight or less. More specifically, the content of residual ethylene glycol in the recycled bis(2-hydroxyethyl) terephthalate may be 0.2% by weight or less, 0.15% by weight or less, or 0.1% by weight or less.

As described above, although bis(2-hydroxyethyl) terephthalate used in the preparation of a polyester resin according to the present invention is a recycled monomer obtained by the depolymerization of waste polyester, it has high purity and a low content of impurities such as diethylene glycol esters.

According to an embodiment, the process for preparing recycled bis(2-hydroxyethyl) terephthalate according to the present invention comprises (a) depolymerizing waste polyester by glycolysis to obtain a crude bis(2-hydroxyethyl) terephthalate solution; (b) cooling the crude bis(2-hydroxyethyl) terephthalate solution to crystallize it; and (c) performing solid-liquid separation of the crystallized product using a pressurized filter.

Specifically, the depolymerization in step (a) may comprise (1) subjecting waste polyester to depolymerization through a first glycolysis reaction at a temperature of 180°C to 200°C to obtain a first reactant; and (2) subjecting the first reactant to depolymerization at a temperature of 150°C to 170°C through a second glycolysis reaction to obtain a second reactant.

In addition, the pressurized filter in step (c) may be a Nutsche filter or a filter press. In addition, acetate-based compounds and diethylene glycol-based compounds may be removed through the pressurized filter in step (c).

The recycled bis(2-hydroxyethyl) terephthalate may be prepared by further carrying out a step of removing an unreacted glycol by distillation.

In addition, the recycled bis(2-hydroxyethyl) terephthalate may be prepared by further carrying out at least one of thin-film evaporation under reduced pressure; and dissolution in water and adsorption-crystallization.

As organic substances of low weight, including acetic acid, are removed through cooling crystallization and pressurized filtration during the purification process, the content of by-products such as acetate-based ester compounds or diethylene glycol ester compounds can be effectively controlled.

**Process for preparing a polyester resin**

The process for preparing a polyester resin according to the present invention comprises polymerizing a polyester resin using recycled bis(2-hydroxyethyl) terephthalate (BHET) obtained through the depolymerization of waste polyester.

The polyester resin according to the present invention may be prepared by further adding terephthalic acid or a derivative thereof and/or ethylene glycol in addition to the recycled bis(2-hydroxyethyl) terephthalate. In addition, the polyester resin may be prepared as a copolymer by further adding comonomers selected from other dicarboxylic acids and/or diols.

In the polymerization, an esterification reaction (step 1) and a polycondensation reaction (step 2) may be sequentially carried out.

The esterification reaction may be carried out in the presence of an esterification reaction catalyst. For example, a zinc-based compound may be used. Specific examples of the zinc-based catalyst include zinc acetate, zinc acetate hydrate, zinc chloride, zinc sulfate, zinc sulfide, zinc carbonate, zinc citrate, zinc gluconate, or mixtures thereof.

The esterification reaction may be carried out, for example, at a pressure of 0 $kgf/cm^2$ to 10.0 $kgf/cm^2$ and a temperature of 150°C to 300°C. The esterification reaction conditions may be appropriately adjusted according to the specific characteristics of the polyester to be produced, the ratio of each component, or process conditions. Specifically, the pressure in the esterification reaction may be 0 $kg/cm^2$ to 5.0 $kg/cm^2$, more specifically, 0.1 $kg/cm^2$ to 3.0 $kg/cm^2$. In addition, the temperature in the esterification reaction may be 200°C to 270°C, more specifically, 240°C to 260°C.

The esterification reaction may be carried out in a batch or continuous type. Although each of the raw materials may be separately fed, it is preferable to feed them in the form of a slurry in which a diol component, a dicarboxylic acid component, and recycled BHET are mixed. In addition, a diol component such as isosorbide, which is solid at room temperature, may be dissolved in water or ethylene glycol and then mixed with a dicarboxylic acid component such as terephthalic acid to prepare a slurry. Alternatively, isosorbide may be melted at 60°C or higher, which is then mixed with a dicarboxylic acid component such as terephthalic acid and other diol components to prepare a slurry. In addition, water may be additionally added to the mixed slurry to help increase the fluidity of the slurry.

The polycondensation reaction may be carried out, for example, by reacting the esterification reaction product at a temperature of 150°C to 300°C and under a reduced pressure condition of 0.01 mmHg to 600 mmHg for 1 hour to 24 hours. The polycondensation reaction may produce a polyester resin having a relatively low molecular weight through melt polymerization. In addition, a polyester resin having a relatively high molecular weight may be produced through solid-state polymerization after the melt polymerization.

The temperature in the polycondensation reaction may be 150°C to 300°C, specifically, 200°C to 290°C, more specifically, 260°C to 280°C. In addition, the pressure in the polycondensation reaction may be 0.01 mmHg to 600 mmHg, specifically, 0.05 mmHg to 200 mmHg, more specifically, 0.1 mmHg to 100 mmHg. As the reduced pressure condition is adopted in the polycondensation reaction, glycol, which is a by-product of the polycondensation reaction, can be removed from the system. If the pressure in the polycondensation reaction exceeds the range of 0.01 mmHg to 600 mmHg, the removal of by-products may be insufficient. In addition, if the temperature in the polycondensation reaction is lower than 150°C, a glycol as a by-product of the reaction cannot be effectively removed from the system; thus, the intrinsic viscosity of a final reaction product is low, resulting in a decrease in the physical properties of the final polyester resin. If the temperature in the polycondensation reaction exceeds 300°C, the possibility of yellowing of a final polyester resin increases. In addition, the polycondensation reaction may be carried out for a necessary period of time, for example, an average residence time of 1 hour to 24 hours, until the intrinsic viscosity of a final reaction product reaches an appropriate level.

In addition, the polycondensation reaction may be carried out in the presence of a polycondensation catalyst. The polycondensation catalyst may be, for example, a titanium-based compound, a germanium-based compound, an antimony-based compound, an aluminum-based compound, a tin-based compound, or a mixture thereof. Examples of the titanium-based compound include tetraethyl titanate, acetyltripropyl titanate, tetrapropyl titanate, tetrabutyl titanate, 2-ethylhexyl titanate, octylene glycol titanate, lactate titanate, triethanolamine titanate, acetylacetonate titanate, ethylacetoacetic ester titanate, isostearyl titanate, titanium dioxide, and the like. Examples of the germanium-based compound include germanium dioxide, germanium tetrachloride, germanium ethylene glycol oxide, germanium acetate, or mixtures thereof. Preferably, germanium dioxide can be used. Both crystalline and amorphous germanium dioxide may be used, and glycol-soluble ones may also be used. The amount of the polycondensation catalyst used may be such that the amount of titanium element relative to the weight of the polyester resin is about 1 to 100 ppm, more preferably, about 1 to 50 ppm.

In addition to the polycondensation catalyst, a stabilizer, a colorant, a crystallizing agent, an antioxidant, a branching agent, or the like may be further used. The timing of adding these additives is not particularly limited, and they may be added at any time during the preparation step of the polyester resin.

As the stabilizer, phosphorus-based compounds such as phosphoric acid, trimethyl phosphate, triethyl phosphate, and triethyl phosphonoacetate may be generally used. The amount thereof added may be such that 10 to 200 ppm relative to the weight of the polyester resin based on the amount of phosphorous element. In addition, common colorants such as cobalt acetate and cobalt propionate may be exemplified as the colorant added to enhance the color of the polyester resin. The amount thereof added may be such that 10 to 200 ppm relative to the weight of the polyester resin based on the amount of cobalt element. If necessary, anthraquinone-based compounds, perinone-based compounds, azo-based compounds, methine-based compounds, or the like may be used as an organic colorant. Commercially available toners such as Polysynthren Blue RLS from Clarient or Solvaperm Red BB from Clarient may be used. The amount of the organic compound colorant added may be adjusted to 0 to 50 ppm based on the weight of the polyester resin. A crystal nucleating agent, an ultraviolet absorber, a polyolefin resin, a polyamide resin, and the like may be exemplified as the crystallizing agent. Hindered phenol-based antioxidants, phosphite-based antioxidants, thioether-based antioxidants, or mixtures thereof may be exemplified as the antioxidant. Conventional branching agents having three or more functional groups, for example, trimellitic anhydride, trimethylol propane, trimellitic acid, or mixtures thereof may be exemplified as the branching agent.

The intrinsic viscosity of the polyester resin at 35°C may be 0.5 dl/g or more, 0.6 dl/g or more, or 0.7 dl/g or more, and may be 1.2 dl/g or less, 1.1 dl/g or less, 1.0 dl/g or less, or 0.9 dl/g or less. For example, the polyester resin may have an intrinsic viscosity of 0.5 dl/g to 1.2 dl/g at 35°C. Specifically, the polyester resin is dissolved in ortho-chlorophenol (OCP) at 100°C at a concentration of 0.12%, and the intrinsic viscosity is measured with an Ubbelohde viscometer in a thermostat at 35°C.

The polyester resin according to the present invention has excellent qualities, such as thermal resistance and color, by controlling the content of acetaldehyde to a certain range while it comprises bis(2-hydroxyethyl) terephthalate obtained by the depolymerization of waste polyester. Specifically, acetaldehyde is formed as a by-product during the polycondensation reaction for the preparation of the polyester resin. If an acetate-based ester compound is present in the recycled bis(2-hydroxyethyl) terephthalate, the formation of acetaldehyde may increase during the polycondensation procedure. However, since the polyester resin of the present invention is prepared using recycled bis(2-hydroxyethyl) terephthalate in which the content of acetate-based ester compounds is controlled, the formation of acetaldehyde during the polycondensation procedure can be suppressed.

The polyester resin according to the present invention has excellent qualities such as thermal resistance and color; thus, it can be used in the manufacture of products in various fields.

Accordingly, the present invention provides an article, which comprises the polyester resin as described above. For example, the article may be a container, a blow, a film, a sheet, or a profile.

Specific examples of the container include cosmetic containers and food containers.

The blow refers to a material for obtaining a hollow plastic molded article through blow molding. Specific examples thereof include an injection blow and an extrusion blow.

Specific examples of the film include a heat-shrinkable film and a blown film.

The profile refers to a continuously extrusion-molded article of plastics excluding sheets and films. It may be manufactured by a general extrusion molding method and may have, for example, a tube or channel shape.

## Mode for the Invention

Hereinafter, a preferred embodiment is presented for the understanding of the present invention. However, the following examples are provided only to help easily understand the present invention, and the scope of the present invention is not limited thereby.

### <Process for preparing recycled BHET>

### Preparation Example: r-BHET A1

A first reactor made of stainless steel (SUS) was charged with 1,000 g of a waste polyester resin, 2,000 g of ethylene glycol, and 5.0 g of zinc acetate anhydride. The temperature inside the reactor was raised to 180°C, and depolymerization (first glycolysis reaction) was carried out for 2 hours. The reactant (first reactant) thus obtained was transferred to a second reactor and cooled to 150°C. 2,000 g of ethylene glycol was further added thereto, and depolymerization (second glycolysis reaction) was carried out for 2 hours while the reactor temperature was maintained at 150°C.

The reactant (second reactant) thus obtained was cooled to 120°C through reduced pressure flash, and 16 g of a filter aid (Celite™ 545) was added thereto, followed by pressurized filtration to carry out solid-liquid separation. The separated liquid reactant was passed through a column filled with an ion-exchange resin (BC107(H) of Bonlite) to remove ionic impurities to obtain a mixture (third reactant) containing bis(2-hydroxyethyl) terephthalate and ethylene glycol.

The mixture (third reactant) was cooled to room temperature over 2 hours under stirring at 100 rpm in a 10-liter crystallizer equipped with a cooling water circulation jacket. The obtained crystallized product was separated into solid and liquid using a pressurized Nutsche filter (jacket type, filtration area 0.2 $m^2$) under a pressure of 3 bar to obtain a BHET cake (fourth reactant).

The BHET cake was transferred to a 10-liter distillation apparatus and heated to 130°C again. Vacuum distillation was carried out under stepwise reduced pressure conditions from 760 Torr to 0.8 Torr to recover unreacted ethylene glycol. The reactant (fifth reactant) from which ethylene glycol had been removed was subjected to thin film evaporation at 220°C and 0.08 Torr in a thin film evaporator (VKL70-4S of VTA) to obtain 1,040 g of a product from which oligomers of dimers or higher had been removed. Thereafter, for adsorption-crystallization, 1,040 g of the above product and 3,120 g of distilled water were charged to a 10-liter glass reactor, dissolved at a temperature of 70°C, and then 5.2 g of activated carbon was added thereto, followed by stirring for 30 minutes and filtration thereof. The filtrate was cooled to room temperature for the crystallization thereof, filtered, and dried in a vacuum oven. As a result, 1,980 g of recycled bis(2-hydroxyethyl) terephthalate was obtained.

### Preparation Example: r-BHET A2

The same procedure as in the Preparation Example for r-BHET A1 was repeated to obtain recycled bis(2-hydroxyethyl) terephthalate, except that the reaction time of the first glycolysis reaction was adjusted to 1 hour.

### Preparation Example: r-BHET A3

The same procedure as in the Preparation Example for r-BHET A1 was repeated to obtain recycled bis(2-hydroxyethyl) terephthalate, except that the filtration was carried out using a filter press (filtration area 0.4 $m^2$, filtration plate 4 ea) under a pressure of 18 bar instead of a pressurized Nutsche filter.

**Preparation Example: r-BHET A4**

The same procedure as in the Preparation Example for r-BHET A1 was repeated to obtain recycled bis(2-hydroxyethyl) terephthalate, except that a waste polyester fiber was used as a waste polyester resin.

**Preparation Example: r-BHET A5**

The same procedure as in the Preparation Example for r-BHET A1 was repeated to obtain recycled bis(2-hydroxyethyl) terephthalate, except that the adsorption-crystallization was not carried out after the thin film evaporation.

**Preparation Example: r-BHET A6**

The same procedure as in the Preparation Example for r-BHET A4 was repeated to obtain recycled bis(2-hydroxyethyl) terephthalate.

**Preparation Example: r-BHET A7**

The same procedure as in the Preparation Example for r-BHET A1 was repeated to obtain recycled bis(2-hydroxyethyl) terephthalate.

**Preparation Example: r-BHET B1**

The same procedure as in the Preparation Example for r-BHET A1 was repeated to obtain recycled bis(2-hydroxyethyl) terephthalate, except that the temperature in the first glycolysis reaction was adjusted to 210°C, and the temperature in the second glycolysis reaction was adjusted to 250°C.

**Preparation Example: r-BHET B2**

The same procedure as in the Preparation Example for r-BHET A1 was repeated to obtain recycled bis(2-hydroxyethyl) terephthalate, except that the cooling crystallization and pressurized Nutsche filter steps were omitted.

**Test Example**

**(1) High-performance liquid chromatography (HPLC)**

About 0.01 g of recycled bis(2-hydroxyethyl) terephthalate was diluted in about 20 ml of methanol, which was analyzed by high-performance liquid chromatography (HPLC) (model: Waters e2695, column: C18 (4.6 × 250 mm), 5 μm, UV detector: 242 nm, injection volume: 10 μl, eluent (gradient) A: $H_2O$ + $H_3PO_4$, B: acetonitrile) Thereafter, the peak area fractions (%) of the following components among the total peak area of HPLC were obtained.

- MHET: monohydroxyethyl terephthalate
- BHET: bis(2-hydroxyethyl) terephthalate,
- DEG-ester-1: 2-hydroxyethyl[2-(2-hydroxyethoxy)ethyl] terephthalate
- DEG-ester-2: bis[2-(2-hydroxyethoxy)ethyl]benzene-1,4-dicarboxylate
- HA-ester: 2-hydroxyethyl(2-acetoxyethyl) terephthalate
- Dimer: BHET dimer
- Trimer: BHET trimer

**(2) Gas chromatography (GC)**

0.1 g of recycled bis(2-hydroxyethyl) terephthalate was dissolved in 10 ml of $CHCl_3$, treated with a filter of 0.45 μm, and measured by GC.

- Model: Agilent 7890B
- Column: DB-624 (30 m × 0.25 mm × 1.4 μm)
- Oven Temp.: 60°C (2 min.) - 10°C/min. - 200°C (0 min.) - 20°C/min. - 260°C (5 min.)
- Injector temp.: 250°C
- Detector temp.: 250°C

- Flow: 1.5 ml/min. ($N_2$), split ratio: 1/50

**(3) TDI**

Recycled bis(2-hydroxyethyl) terephthalate was subjected to HPLC analysis in the same manner as in section (1) above. The thermal property drop index (TDI) defined by the following equation was then calculated.

$$TDI = [DEG\text{-}ester\text{-}1] + [DEG\text{-}ester\text{-}2] \times 2 + exp\hat{}[HA\text{-}ester]$$

Here, DEG-ester-1 is the peak area fraction (%) of 2-hydroxyethyl[2-(2-hydroxyethoxy)ethyl] terephthalate, DEG-ester-2 is the peak area fraction (%) of bis[2-(2-hydroxyethoxy)ethyl]benzene-1,4-dicarboxylate, and HA-ester is the peak area fraction (%) of 2-hydroxyethyl(2-acetoxyethyl) terephthalate. It was calculated by taking only the numerical values excluding the units of these parameters.

The results are shown in the Table below.

[Table 1]

| | **r-BHET** | **A1** | **A2** | **A3** | **A4** | **A5** | **A6** | **A7** |
|---|---|---|---|---|---|---|---|---|
| HPLC (%) | BHET | 98.21 | 98.10 | 98.51 | 97.22 | 96.21 | 97.22 | 98.21 |
| | MHET | 0.78 | 1.10 | 0.67 | 1.70 | 1.72 | 1.70 | 0.78 |
| | DEG-ester-1 | 0.41 | 0.32 | 0.22 | 0.44 | 0.80 | 0.44 | 0.41 |
| | DEG-ester-2 | 0.04 | 0.02 | 0.20 | 0.08 | 0.12 | 0.08 | 0.04 |
| | HA-ester | 0.20 | 0.21 | 0.11 | 0.23 | 0.41 | 0.23 | 0.20 |
| | Dimer | 0.21 | 0.20 | 0.34 | 0.28 | 0.22 | 0.28 | 0.21 |
| | Trimer | 0.01 | 0.00 | 0.00 | 0.01 | 0.05 | 0.01 | 0.01 |
| | Others | 0.15 | 0.05 | 0.13 | 0.04 | 0.47 | 0.04 | 0.15 |
| GC (% by weight) | Residual EG | 0.10 | 0.10 | 0.10 | 0.10 | 0.20 | 0.20 | 0.07 |
| TDI | | 1.71 | 1.59 | 1.74 | 1.86 | 2.55 | 1.86 | 1.71 |

[Table 2]

| | **r-BHET** | **B1** | **B2** |
|---|---|---|---|
| HPLC (%) | BHET | 90.04 | 91.20 |
| | MHET | 1.82 | 2.14 |
| | DEG-ester-1 | 5.20 | 1.85 |
| | DEG-ester-2 | 1.32 | 0.98 |
| | HA-ester | 0.33 | 1.12 |
| | Dimer | 0.22 | 0.79 |
| | Trimer | 0.90 | 0.70 |
| | Others | 0.17 | 1.22 |
| GC (% by weight) | Residual EG | 0.22 | 0.23 |
| TDI | | 9.23 | 6.87 |

**<Preparation of a polyester resin>**

**Example 1**

A reactor equipped with a column and a condenser that can be cooled by water was charged with recycled bis(2-hydroxyethyl) terephthalate (r-BHET A1, 6,273.5 g), terephthalic acid (TPA, 4,100.0 g), ethylene glycol (EG, 612.5 g), 1,4-cyclohexanedimethanol (CHDM, 1,067.0 g), isosorbide (ISB, 288.5 g), diethylene glycol (DEG, 72.1 g), a Ti catalyst (0.4 g), phosphoric acid (10.0 g), a blue toner (0.010 g), and a red toner (0.005 g).

Subsequently, nitrogen was injected into the reactor to make the reactor pressurized by 1.0 kgf/cm$^2$ higher than normal pressure (absolute pressure: 1,495.6 mmHg). Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a reactor capable of a reaction under vacuum.

Then, the pressure of the reactor was reduced from normal pressure to 5 Torr (absolute pressure: 5 mmHg) over 30 minutes. At the same time, the temperature of the reactor was raised to 265°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture was then discharged to the outside of the reactor to form strands, which were solidified with a cooling liquid and then granulated to have an average weight of about 12 to 14 mg.

The granules were left at 150°C for 1 hour to be crystallized, which were then fed to a solid-state polymerization reactor. While nitrogen flowed at a rate of 50 L/minute, the temperature of the reactor was raised from room temperature to 200°C at a rate of 40°C/hour. While it was maintained, a solid-state polymerization was carried out until the intrinsic viscosity (IV) of the granules in the reactor reached 1.00 dl/g to obtain about 10 kg of a polyester resin.

**Example 2**

The same procedure as in Example 1 was repeated to obtain about 10 kg of a polyester resin, except that recycled bis(2-hydroxyethyl) terephthalate (r-BHET A2, 11,936.1 g), 1,4-cyclohexanedimethanol (CHDM, 1,353.4 g), diethylene glycol (DEG, 137.2 g), a Ge catalyst (6.4 g), a blue toner (0.030 g), and a red toner (0.015 g) were charged, the esterification reaction was carried out at a pressure higher than normal pressure by 2.0 kgf/cm$^2$ and a temperature of 260°C, the polycondensation reaction was carried out at a temperature of 275°C until the intrinsic viscosity (IV) reached 0.65 dl/g, and no solid-state polymerization was carried out.

**Example 3**

The same procedure as in Example 1 was repeated to obtain about 10 kg of a polyester resin, except that recycled bis(2-hydroxyethyl) terephthalate (r-BHET A3, 8,472.8 g), terephthalic acid (TPA, 2,373.1 g), ethylene glycol (EG, 177.3 g), 1,4-cyclohexanedimethanol (CHDM, 960.7 g), diethylene glycol (DEG, 347.9 g), a CHDM derivative (comprising 4-(hydroxymethyl)cyclohexylmethyl-4-(hydroxymethyl)cyclohexanecarboxylate and 4-(4-(hydroxymethyl)cyclohexylmethoxymethyl)cyclohexylmethanol at a molar ratio of 1:3, 347.9 g), a Ge catalyst (6.4 g), a Ti catalyst (0.5 g), a blue toner (0.040 g), and a red toner (0.010 g) were charged, the esterification reaction was carried out at a pressure higher than normal pressure by 0.5 kgf/cm$^2$ and a temperature of 260°C, the polycondensation reaction was carried out at a temperature of 275°C until the intrinsic viscosity (IV) reached 0.75 dl/g, and no solid-state polymerization was carried out.

**Example 4**

The same procedure as in Example 1 was repeated to obtain about 10 kg of a polyester resin, except that recycled bis(2-hydroxyethyl) terephthalate (r-BHET A4, 2,220.3 g), terephthalic acid (TPA, 5,804.2 g), ethylene glycol (EG, 9.0 g), 1,4-cyclohexanedimethanol (CHDM, 3,776.2 g), isosorbide (ISB, 1,701.6 g), diethylene glycol (DEG, 319.1 g), a Ti catalyst (0.4 g), phosphoric acid (3.0 g), a blue toner (0.015 g), and a red toner (0.005 g) were charged, the esterification reaction was carried out at a pressure higher than normal pressure by 1.0 kgf/cm$^2$ and a temperature of 265°C, the polycondensation reaction was carried out at a temperature of 280°C until the intrinsic viscosity (IV) reached 0.75 dl/g, and no solid-state polymerization was carried out.

**Example 5**

The same procedure as in Example 1 was repeated to obtain about 10 kg of a polyester resin, except that recycled

bis(2-hydroxyethyl) terephthalate (r-BHET A5, 4,739.6 g), terephthalic acid (TPA, 4,646.3 g), ethylene glycol (EG, 1,793.2 g), 1,4-cyclohexanedimethanol (CHDM, 1,679.4 g), a CHDM derivative (comprising 4-(hydroxymethyl)cyclohexylmethyl-4-(hydroxymethyl)cyclohexanecarboxylate and 4-(4-(hydroxymethyl)cyclohexylmethoxymethyl)cyclohexylmethanol at a molar ratio of 1:3, 204.3 g), a Ge catalyst (12.8 g), a Ti catalyst (0.9 g), a blue toner (0.006 g), and a red toner (0.002 g) were charged, the esterification reaction was carried out at a pressure higher than normal pressure by 2 kgf/cm$^2$ and a temperature of 255°C, the polycondensation reaction was carried out at a temperature of 285°C until the intrinsic viscosity (IV) reached 0.80 dl/g, and no solid-state polymerization was carried out.

**Example 6**

The same procedure as in Example 1 was repeated to obtain about 10 kg of a polyester resin, except that recycled bis(2-hydroxyethyl) terephthalate (r-BHET A6, 12,510.4 g), terephthalic acid (TPA, 430.3 g), ethylene glycol (EG, 225.0 g), a CHDM derivative (comprising 4-(hydroxymethyl)cyclohexylmethyl-4-(hydroxymethyl)cyclohexanecarboxylate and 4-(4-(hydroxymethyl)cyclohexylmethoxymethyl)cyclohexylmethanol at a molar ratio of 1:3, 227.1 g), a Ge catalyst (12.8 g), a Ti catalyst (0.9 g), a blue toner (0.006 g), and a red toner (0.002 g) were charged, the esterification reaction was carried out at a pressure higher than normal pressure by 2 kgf/cm$^2$ and a temperature of 255°C, the polycondensation reaction was carried out at a temperature of 285°C until the intrinsic viscosity (IV) reached 0.80 dl/g, and no solid-state polymerization was carried out.

**Example 7**

The same procedure as in Example 1 was repeated to obtain about 10 kg of a polyester resin, except that recycled bis(2-hydroxyethyl) terephthalate (r-BHET A7, 8,660.5 g), terephthalic acid (TPA, 2,425.7 g), isophthalic acid (IPA, 5,660.0 g), ethylene glycol (EG, 100.7 g), 1,4-cyclohexanedimethanol (CHDM, 1,402.8 g), isosorbide (ISB, 474.1 g), diethylene glycol (DEG, 355.6 g), a Ti catalyst (0.9 g), phosphoric acid (1.0 g), a blue toner (0.020 g), and a red toner (0.010 g) were charged, the esterification reaction was carried out at a pressure higher than normal pressure by 3.0 kgf/cm$^2$ and a temperature of 260°C, the polycondensation reaction was carried out at a temperature of 275°C until the intrinsic viscosity (IV) reached 0.65 dl/g, and no solid-state polymerization was carried out.

**Comparative Example 1**

The same procedure as in Example 1 was repeated to obtain about 10 kg of a polyester resin, except that recycled bis(2-hydroxyethyl) terephthalate (r-BHET B1, 5,968.0 g), terephthalic acid (TPA, 3,900.4 g), ethylene glycol (EG, 874.1 g), 1,4-cyclohexanedimethanol (CHDM, 1,353.4 g), a Ge catalyst (12.8 g), a blue toner (0.020 g), and a red toner (0.010 g) were charged, the esterification reaction was carried out at a pressure higher than normal pressure by 0.5 kgf/cm$^2$ and a temperature of 260°C, the polycondensation reaction was carried out at a temperature of 280°C until the intrinsic viscosity (IV) reached 0.70 dl/g, and no solid-state polymerization was carried out.

**Comparative Example 2**

The same procedure as in Example 1 was repeated to obtain about 10 kg of a polyester resin, except that recycled bis(2-hydroxyethyl) terephthalate (r-BHET B2, 10,037.5 g), terephthalic acid (TPA, 1,640.0 g), ethylene glycol (EG, 2,143.8 g), 1,4-cyclohexanedimethanol (CHDM, 1,067.0 g), diethylene glycol (DEG, 72.1 g), a Ti catalyst (0.4 g), a blue toner (0.015 g), and a red toner (0.005 g) were charged, the esterification reaction was carried out at a pressure higher than normal pressure by 1 kgf/cm$^2$ and a temperature of 265°C, the polycondensation reaction was carried out at a temperature of 270°C until the intrinsic viscosity (IV) reached 0.70 dl/g, and the solid-state polymerization was carried out at a temperature of 200°C until the intrinsic viscosity (IV) reached 0.90 dl/g.

The types and contents of the recycled BHET and the amounts of comonomers used in the Examples and Comparative Examples are summarized in the table below.

[Table 3]

| | Info. | Ex. 1 | Ex. 2 | Ex. 3 | Ex. 4 | Ex. 5 | Ex. 6 | Ex. 7 |
|---|---|---|---|---|---|---|---|---|
| Recycled BHET | Type | A1 | A2 | A3 | A4 | A5 | A6 | A7 |
| | % by weight | 53 | 84 | 65 | 16 | 36 | 94 | 65 |

(continued)

| | Info. | Ex. 1 | Ex. 2 | Ex. 3 | Ex. 4 | Ex. 5 | Ex. 6 | Ex. 7 |
|---|---|---|---|---|---|---|---|---|
| Monomer feeding (part by mole) | TPA | 24.7 | 0.0 | 14.3 | 35.0 | 28.0 | 2.6 | 14.6 |
| | EG | 9.9 | 0.0 | 2.9 | 0.1 | 28.9 | 3.6 | 1.6 |
| | DEG | 0.7 | 1.3 | 3.3 | 3.0 | 0.0 | 0.0 | 3.4 |
| | CHDM | 7.4 | 9.4 | 6.7 | 26.2 | 11.7 | 0.0 | 9.7 |
| | CHDM derivative | 0.0 | 0.0 | 1.3 | 0.0 | 0.8 | 0.8 | 0.0 |
| | ISB | 2.0 | 0.0 | 0.0 | 11.7 | 0.0 | 0.0 | 3.2 |
| | r-BHET | 24.7 | 47.0 | 33.4 | 8.7 | 18.7 | 49.3 | 34.1 |

[Table 4]

| | Info. | C. Ex. 1 | C. Ex. 2 |
|---|---|---|---|
| Recycled BHET | Type | B1 | B2 |
| | % by weight | 48 | 69 |
| Monomer feeding (part by mole) | TPA | 23.5 | 9.9 |
| | EG | 14.1 | 34.6 |
| | DEG | 0.0 | 0.7 |
| | CHDM | 9.4 | 7.4 |
| | CHDM derivative | 0.0 | 0.0 |
| | ISB | 0.0 | 0.0 |
| | r-BHET | 23.5 | 39.5 |

**Test Example**

**(1) Thermal resistance index**

The thermal resistance indices of the polyester resin obtained in each of the Examples and Comparative Examples were calculated as follows.

a. Resin thermal resistance index

The resin thermal resistance index was calculated according to the following Equation (Ia).

$$\text{Resin thermal resistance index} = \text{mole fraction of ethylene glycol} \times 0.02 \text{ (Ia)}$$

Here, the mole fraction of ethylene glycol is the content (% by mole) of the ethylene glycol component based on the total number of moles of the diol component contained in the polyester resin.

b. Recycle thermal resistance index

The recycle thermal resistance index was calculated according to the following Equation (Ib).

$$\text{Recycle thermal resistance index} = (\text{r-BHET TDI}) \times \text{weight fraction of r-BHET} \times 2 \text{ (Ib)} \qquad \text{(Ib)}$$

Here, the weight fraction of r-BHET is the content (% by weight) of recycled BHET based on the total weight of the polyester resin, and the r-BHET TDI is the TDI value of the recycled BHET calculated in the Test Examples above.

c. Combined thermal resistance index

The combined thermal resistance index was calculated using the resin thermal resistance index and the recycle thermal resistance index obtained above.

Combined thermal resistance index = resin thermal resistance index + recycle thermal resistance index (I) (I)

**(2) ΔCol-b**

The color changes in the polyester resins obtained in the Examples and Comparative Examples were measured in a high temperature and humid environment.

a. Initial Col-b

Reflection data were obtained with Illuminuteant D65 using Color Flex EZ of Hunter Lab at an observer's angle of 2° for the polyester resin pellets. The b value in the Hunter Lab color space was calculated using a color analyzer in the software.

b. Col-b after storage in a high temperature and humid environment

Each polyester resin was stored at 50°C and 60% R.H. for 10 days. The b value in the Hunter Lab color space was calculated in the same manner as above.

c. ΔCol-b

The ΔCol-b was calculated according to the following equation.

$$\Delta \text{Col-b} = \text{Col-b [10D]} - \text{Col-b [0D]}$$

Here, Col-b [10D] is the b value in the Hunter Lab color space measured after the polyester resin is stored at 50°C and 60% R.H. for 10 days, and Col-b [0D] is the b value in the Hunter Lab color space measured for the polyester resin before storage.

**(3) LC-UV**

The content of acetaldehyde (ppm) in the polyester resin obtained in each of the Examples and Comparative Examples was measured through LC-UV (liquid chromatography with a UV detector) analysis as follows. Specifically, the content of acetaldehyde may refer to the content of acetaldehyde based on the weight of the polyester resin (i.e., ppmw).

**[0161]** - 1 g of each polyester resin was added to 10 ml of a mixture of acetonitrile and deionized water (50:50 by volume) to prepare a sample. 200 μl of acidified 2,3-dinitrophenylhydrazine (2,3-DNPH) was added thereto, and the mixture was stirred at 37°C for 1 hour.

- Column: QUASAR C18 5 μm
- Column temperature: 35°C
- Sample volume: 20 μl
- Diluent: mixture of acetonitrile and deionized water
- Flow rate: 0.8 ml/minute
- Detector: UV, 363 nm
- Quantification of acetaldehyde was calibrated using a standard range of 0.05 to 20 mg/l. The calibration model was considered valid if its $r^2$ was greater than or equal to 0.995.

**(4) Intrinsic viscosity**

The polyester resins prepared in the Examples were each dissolved in ortho-chlorophenol (OCP) at 100°C at a concentration of 0.12%, and the intrinsic viscosity (IV, dl/g) was measured with an Ubbelohde viscometer in a thermostat at 35°C. As a result, all the polyester resins obtained in the Examples were confirmed to have an intrinsic viscosity in the range of 0.5 dl/g to 1.2 dl/g at 35°C.

The test results are shown in the Table below.

[Table 5]

| | Info. | Ex. 1 | Ex. 2 | Ex. 3 | Ex. 4 | Ex. 5 | Ex. 6 | Ex. 7 |
|---|---|---|---|---|---|---|---|---|
| Thermal resistance index | Recycle thermal resistance index | 1.81 | 2.68 | 2.25 | 0.61 | 1.83 | 3.50 | 2.23 |
| | Resin thermal resistance index | 1.64 | 1.40 | 1.47 | 0.40 | 1.44 | 1.96 | 1.50 |
| | Combined thermal resistance index | 3.45 | 4.08 | 3.72 | 1.01 | 3.27 | 5.46 | 3.73 |
| ΔCol-b | 50°C and 60% for 10 days | 0.3 | -0.7 | 0.15 | -0.5 | 0.1 | 0.6 | -0.85 |
| LC-UV | Acetaldehyde (ppm) | 0.68 | 0.84 | 0.38 | 0.22 | 0.13 | 0.12 | 0.7 |

[Table 6]

| | Info. | C. Ex. 1 | C. Ex. 2 |
|---|---|---|---|
| Thermal resistance index | Recycle thermal resistance index | 8.93 | 9.51 |
| | Resin thermal resistance index | 2.10 | 2.46 |
| | Combined thermal resistance index | 11.03 | 11.97 |
| ΔCol-b | 50°C and 60% for 10 days | -1.1 | 1.5 |
| LC-UV | Acetaldehyde (ppm) | 3.2 | 1.2 |

As can be seen from the above test results, the polyester resins of Examples 1 to 7 had excellent thermal resistance and color quality while the acetaldehyde content was controlled to a certain range even though a recycled monomer was used. In contrast, the polyester resins of Comparative Examples 1 and 2 had an acetaldehyde content outside the preferred range and were poor in thermal resistance and color quality.

## Claims

1. A polyester resin, which comprises recycled bis(2-hydroxyethyl) terephthalate (BHET) obtained by the depolymerization of waste polyester, wherein the content of acetaldehyde is 1 ppm or less.

2. The polyester resin of claim 1, wherein the polyester resin has a ΔCol-b according to the following equation in the range of -1 to +1:

$$\Delta\text{Col-b} = \text{Col-b}\ [10D] - \text{Col-b}\ [0D]$$

wherein Col-b [10D] is the b value in the Hunter Lab color space measured after the polyester resin is stored at 50°C and 60% R.H. for 10 days, and
Col-b [0D] is the b value in the Hunter Lab color space measured for the polyester resin before storage.

3. The polyester resin of claim 1, wherein the polyester resin has a resin thermal resistance index of 2.0 or less as calculated by the following Equation (Ia):

$$\text{Resin thermal resistance index} = \text{mole fraction of ethylene glycol} \times 0.02 \quad \text{(Ia)}$$

wherein the mole fraction of ethylene glycol is the content (% by mole) of the ethylene glycol component based on

the total number of moles of the diol component contained in the polyester resin, and it is calculated by taking only the numerical value excluding the unit of the parameter.

4. The polyester resin of claim 3, wherein the polyester resin has a recycle thermal resistance index of 7.0 or less as calculated by the following Equation (Ib):

$$\text{Recycle thermal resistance index} = (\text{r-BHET TDI}) \times \text{weight fraction of r-BHET} \times 2 \quad \text{(Ib)}$$

wherein the weight fraction of r-BHET is the content (% by weight) of recycled BHET based on the total weight of the polyester resin, and the r-BHET TDI is defined by the following equation when the recycled BHET is analyzed using high-performance liquid chromatography (HPLC):

$$\text{r-BHET TDI} = [\text{DEG-ester-1}] + [\text{DEG-ester-2}] \times 2 + \exp\text{^}[\text{HA-ester}]$$

wherein DEG-ester-1 is the peak area fraction (%) of 2-hydroxyethyl[2-(2-hydroxyethoxy)ethyl] terephthalate, DEG-ester-2 is the peak area fraction (%) of bis[2-(2-hydroxyethoxy)ethyl]benzene-1,4-dicarboxylate, and HA-ester is the peak area fraction (%) of 2-hydroxyethyl(2-acetoxyethyl) terephthalate,
wherein it is calculated by taking only the numerical values excluding the units of these parameters.

5. The polyester resin of claim 4, wherein the polyester resin has a combined thermal resistance index of 9.0 or less as calculated by the following Equation (I):

$$\text{Combined thermal resistance index} = \text{resin thermal resistance index} + \text{recycle (I)} \quad \text{(I)}$$

wherein the resin thermal resistance index is calculated using the above Equation (Ia), and the recycle thermal resistance index is calculated using the above Equation (Ib).

6. The polyester resin of claim 1, wherein the recycled bis(2-hydroxyethyl) terephthalate has a peak area fraction of bis(2-hydroxyethyl) terephthalate of 95% or more and a peak area fraction of 2-hydroxyethyl[2-(2-hydroxyethoxy) ethyl] terephthalate of 2.5% or less, when measured by high-performance liquid chromatography (HPLC).

7. The polyester resin of claim 1, wherein the recycled bis(2-hydroxyethyl) terephthalate has a thermal property drop index (TDI) of 3.0 or less as defined by the following equation when measured by high-performance liquid chromatography (HPLC):

$$\text{TDI} = [\text{DEG-ester-1}] + [\text{DEG-ester-2}] \times 2 + \exp\text{^}[\text{HA-ester}]$$

wherein DEG-ester-1 is the peak area fraction (%) of 2-hydroxyethyl[2-(2-hydroxyethoxy)ethyl] terephthalate, DEG-ester-2 is the peak area fraction (%) of bis[2-(2-hydroxyethoxy)ethyl]benzene-1,4-dicarboxylate, and HA-ester is the peak area fraction (%) of 2-hydroxyethyl(2-acetoxyethyl) terephthalate, wherein it is calculated by taking only the numerical values excluding the units of these parameters.

8. The polyester resin of claim 1, wherein the recycled bis(2-hydroxyethyl) terephthalate has a peak area fraction of an acetate-based ester compound of 1.0% or less and a peak area fraction of a diethylene glycol ester compound of 2.0% or less in total, when measured by high-performance liquid chromatography (HPLC).

9. The polyester resin of claim 8, wherein the acetate-based ester compound comprises 2-hydroxyethyl(2-acetoxyethyl) terephthalate, and
the diethylene glycol ester compound comprises 2-hydroxyethyl[2-(2-hydroxyethoxy)ethyl] terephthalate and bis [2-(2-hydroxyethoxy)ethyl]benzene-1,4-dicarboxylate.

10. The polyester resin of claim 1, wherein the polyester resin comprises at least one comonomer selected from dicarboxylic acids and diols as a constituent component,

the dicarboxylic acid is at least one selected from the group consisting of isophthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid; and
the diol is at least one selected from the group consisting of isosorbide, neopentyl glycol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol.

**11.** The polyester resin of claim 1, wherein the polyester resin comprises at least one recycled monomer selected from the group consisting of recycled ethylene glycol, recycled 1,4-cyclohexanedimethanol, recycled diethylene glycol, recycled neopentyl glycol, recycled isosorbide, recycled terephthalic acid, recycled dimethyl terephthalate, recycled isophthalic acid, and recycled dimethyl isophthalate.

**12.** The polyester resin of claim 1, wherein the polyester resin has an intrinsic viscosity at 35°C of 0.5 dl/g to 1.2 dl/g.

**13.** An article, which comprises the polyester resin according to claim 1.

**14.** The article of claim 13, wherein the article is a container, a blow, a film, a sheet, or a profile.

**INTERNATIONAL SEARCH REPORT**

International application No.
**PCT/KR2024/013010**

**A. CLASSIFICATION OF SUBJECT MATTER**

**C08G 63/183**(2006.01)i; **C08G 63/199**(2006.01)i; **C08G 63/78**(2006.01)i

According to International Patent Classification (IPC) or to both national classification and IPC

**B. FIELDS SEARCHED**

Minimum documentation searched (classification system followed by classification symbols)

C08G 63/183(2006.01); C07C 67/03(2006.01); C07C 67/52(2006.01); C07C 69/82(2006.01); C07C 69/84(2006.01); C08G 63/672(2006.01); C08G 63/78(2006.01); C08J 11/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐 폴리에스테르(waste polyester), 해중합(depolymerization), 비스(2-히드록시에틸)테레프탈레이트(bis(2-hydroxyethyl) terephthalate), 아세트 알데히드(acetaldehyde), 폴리에스테르 수지(polyester resin), 내열(heat resistant)

**C. DOCUMENTS CONSIDERED TO BE RELEVANT**

| Category* | Citation of document, with indication, where appropriate, of the relevant passages | Relevant to claim No. |
|---|---|---|
| X | JP 2003-055300 A (IS KK) 26 February 2003 (2003-02-26)<br>See paragraphs [0001], [0004]-[0005], [0026], [0028] and [0030]-[0035]; claims 1 and 4; and table 1. | 1-10,12-14 |
| Y | | 11 |
| Y | KR 10-2012-0100987 A (CYTEC SURFACE SPECIALTIES, S.A.) 12 September 2012 (2012-09-12)<br>See abstract; and paragraph [0078]. | 11 |
| A | KR 10-2007-0090225 A (ASAHI KASEI CHEMICALS CORPORATION) 05 September 2007 (2007-09-05)<br>See entire document. | 1-14 |
| A | KR 10-2022-0068991 A (POSEIDON PLASTICS LIMITED) 26 May 2022 (2022-05-26)<br>See entire document. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 December 2024** | **02 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/013010**

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0069611 A (SK CHEMICALS CO., LTD. et al.) 19 May 2023 (2023-05-19)<br>See entire document. | 1-14 |

Form PCT/ISA/210 (second sheet) (July 2022)

**INTERNATIONAL SEARCH REPORT**
**Information on patent family members**

International application No.
**PCT/KR2024/013010**

| Patent document cited in search report | Publication date (day/month/year) | Patent family member(s) | Publication date (day/month/year) |
|---|---|---|---|
| JP 2003-055300 A | 26 February 2003 | None | |
| KR 10-2012-0100987 A | 12 September 2012 | CN 102597053 A | 18 July 2012 |
| | | CN 102597053 B | 09 April 2014 |
| | | EP 2325229 A1 | 25 May 2011 |
| | | EP 2499183 A1 | 19 September 2012 |
| | | EP 2499183 B1 | 18 June 2014 |
| | | JP 2013-510917 A | 28 March 2013 |
| | | JP 5735525 B2 | 17 June 2015 |
| | | KR 10-1729803 B1 | 24 April 2017 |
| | | US 2012-0220676 A1 | 30 August 2012 |
| | | US 8637581 B2 | 28 January 2014 |
| | | WO 2011-058130 A1 | 19 May 2011 |
| KR 10-2007-0090225 A | 05 September 2007 | CN 101068848 A | 07 November 2007 |
| | | CN 101068848 B | 25 August 2010 |
| | | CN 101068854 A | 07 November 2007 |
| | | CN 101068854 B | 08 June 2011 |
| | | CN 101068855 A | 07 November 2007 |
| | | CN 101068855 B | 11 May 2011 |
| | | CN 101084256 A | 05 December 2007 |
| | | CN 101084256 B | 17 November 2010 |
| | | EP 1818352 A1 | 15 August 2007 |
| | | EP 1818352 A4 | 21 December 2011 |
| | | EP 1820816 A1 | 22 August 2007 |
| | | EP 1829912 A1 | 05 September 2007 |
| | | EP 1829912 A4 | 25 July 2012 |
| | | EP 1829914 A1 | 05 September 2007 |
| | | JP 4276267 B2 | 10 June 2009 |
| | | JP 4726143 B2 | 20 July 2011 |
| | | JP 4744450 B2 | 10 August 2011 |
| | | JP 5219113 B2 | 26 June 2013 |
| | | KR 10-0857502 B1 | 08 September 2008 |
| | | KR 10-0866356 B1 | 31 October 2008 |
| | | KR 10-0882010 B1 | 04 February 2009 |
| | | KR 10-0895634 B1 | 07 May 2009 |
| | | KR 10-2007-0050985 A | 16 May 2007 |
| | | KR 10-2007-0072587 A | 04 July 2007 |
| | | KR 10-2007-0088710 A | 29 August 2007 |
| | | US 2008-0090975 A1 | 17 April 2008 |
| | | US 2008-0128949 A1 | 05 June 2008 |
| | | US 2008-0146685 A1 | 19 June 2008 |
| | | US 2008-0260979 A1 | 23 October 2008 |
| | | US 2011-0301304 A1 | 08 December 2011 |
| | | US 7807728 B2 | 05 October 2010 |
| | | US 8202591 B2 | 19 June 2012 |
| | | US 8293162 B2 | 23 October 2012 |
| | | WO 2006-059536 A1 | 08 June 2006 |
| | | WO 2006-059605 A1 | 08 June 2006 |
| | | WO 2006-059608 A1 | 08 June 2006 |
| | | WO 2006-068093 A1 | 29 June 2006 |
| KR 10-2022-0068991 A | 26 May 2022 | CN 114630815 A | 14 June 2022 |

Form PCT/ISA/210 (patent family annex) (July 2022)

**INTERNATIONAL SEARCH REPORT**
**Information on patent family members**

International application No.
**PCT/KR2024/013010**

| Patent document cited in search report | Publication date (day/month/year) | Patent family member(s) | Publication date (day/month/year) |
|---|---|---|---|
| | | EP 4013814 A1 | 22 June 2022 |
| | | JP 2022-544275 A | 17 October 2022 |
| | | US 2022-0325064 A1 | 13 October 2022 |
| | | WO 2021-028695 A1 | 18 February 2021 |
| KR 10-2023-0069611 A | 19 May 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20220068991